# EUROPEAN PATENT APPLICATION

(11) **EP 2 704 490 A1**
(43) Date of publication of application: **05.03.2014**
(21) Application number: 12776030.4
(22) Date of filing: 23.04.2012
(51) Int. Cl.: H04W 48/10, H04W 16/02, H04W 72/04

(54) **MOBILE COMMUNICATION SYSTEM AND MOBILE TERMINAL**

(30) Priority: 28.04.2011 JP 2011102513
(71) Applicant: NTT DOCOMO, INC., Chiyoda-ku Tokyo 100-6150 (JP)
(72) Inventor: TAKAHASHI, Hideaki, Tokyo 100-6150 (JP); ABE, Tetsushi, Tokyo 100-6150 (JP); IWAMURA, Mikio, Tokyo 100-6150 (JP)
(74) Representative: HOFFMANN EITLE
(86) International application number: PCT/JP2012/060871
(87) International publication number: WO 2012/147696

(57) **Abstract**

To reduce the number of cells in which a "Measurement Subframe Pattern" is broadcasted, in the mobile communication method according to the present invention, a radio base station eNB#2 broadcasts setting broadcast information in a cell #2 when a radio base station eNB#1 broadcasts a "Measurement Subframe Pattern" in a cell #1. A MOBILE STATION UE in Idle mode receives the "Measurement Subframe Pattern" broadcasted in the cell #1 in order to perform a "Measurement process" based on the "Measurement Subframe Pattern" when the MOBILE STATION UE detects, based on the setting broadcast information broadcasted in the cell #2, that the "Measurement Subframe Pattern" is broadcasted in a neighbor cell.

## Description

### Technical Field

The present invention relates to a mobile communication system and a MOBILE STATION.

### Background Art

It was agreed for "Enhanced Inter Cell Interference Coordination (eICIC)" in Long Term Evolution (LTE) Release 10 that a "Measurement Subframe Pattern" is notified to a MOBILE STATION UE in Connected mode through dedicated Radio Resource Control (RRC) signaling as illustrated in Fig. 5 (see Non-patent Literature 1).

Herein, the "Measurement Subframe Pattern" is the measurement subframe pattern information indicating a subframe used so that the MOBILE STATION UE in Connected mode measures Reference Signal Received Power (RSRP) or Reference Signal Received Quality (RSRQ) in order to monitor the radio link.

On the other hand, it was not agreed for the "eICIC" in LTE Release 10 that a "Measurement Subframe Pattern" is notified to a MOBILE STATION UE in Idle mode.

However, to solve a problem in the following two cases, it is considered that it is necessary to notify the "Measurement Subframe Pattern" to a MOBILE STATION UE in Idle mode.

A first case is that a macro cell (Macro cell) and a pico cell (Pico cell) are located neighboring to each other. A second case is that a macro cell and a Closed Subscriber Group (CSG) cell are located neighboring to each other.

It is defined in LTE Release 10 that a parameter is set in a handover process in order to cause the MOBILE STATION UE in Connected mode to preferentially select a pico cell and a radio resource is time-shared in order to prevent interference such that a "Measurement process" is performed with a part of the time-shared radio resource in the first case.

In LTE Release 10 in that case, a MOBILE STATION UE in Idle mode keeps in standby mode of the macro cell even when approaching a pico cell because a "Measurement Subframe Pattern" is not notified to the MOBILE STATION UE in Idle mode. A handover from the macro cell to the pico cell is performed only when a handover parameter set in the wake of a "measurement report" transmitted after the measurement of the quality of the pico cell is used after the mode is switched to Connected mode in the macro cell.

Thus, there is a problem in that an unnecessary handover through the macro cell occurs after the MOBILE STATION UE in Idle mode is switched to in Connected mode in the pico cell.

Further, in the second case, a CSG cell is an interference source for a MOBILE STATION UE that does not have access to the CSG cell.

Thus, there is a problem in that a MOBILE STATION UE in Idle mode that does not have access to such a CSG cell cannot catch a standby cell (camp-on cell) due to the interference from the CSG cell and keeps in a state in which a station continues searching a standby cell ("Any cell selection") when the MOBILE STATION UE approaches the CSG cell.

In light of the foregoing, a method in which a "Measurement Subframe Pattern" is notified as being included in the broadcast information is proposed as a method for notifying a "Measurement Subframe Pattern" to such a MOBILE STATION UE in Idle mode (see Non-patent Literature 2).

Further, it is also proposed that a threshold for determining whether a "Measurement process" should be performed applying such a "Measurement Subframe Pattern" is also broadcasted in addition to the "Measurement Subframe Pattern" in the method (see Non-patent Literature 3).

In that case, the MOBILE STATION UE in Idle mode is configured to apply the "Measurement Subframe Pattern" when RSRQ measured without applying the "Measurement Subframe Pattern" is lower than the threshold.

### Citation List

### Non-patent Literature

Non-patent Literature 1: 3GGP contribution R2-111617
Non-patent Literature 2: 3GGP contribution R2-106345
Non-patent Literature 3: 3GGP contribution R2-106280

### Summary of Invention

### Technical Problem

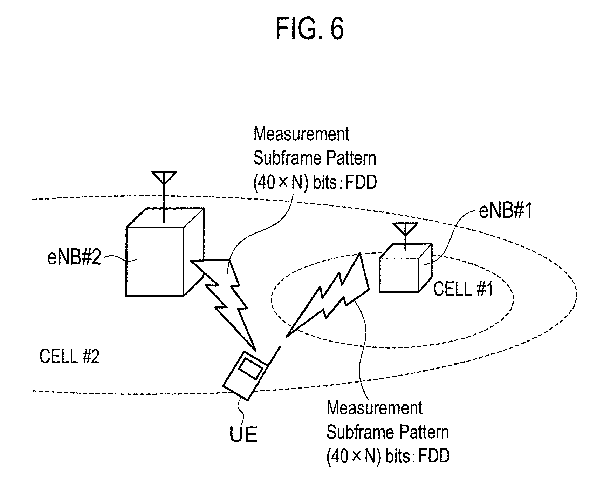

However, there is a problem in the proposed techniques in that the overhead for the broadcast information is increased because it is necessary to broadcast a "Measurement Subframe Pattern" to the MOBILE STATION UE in Idle mode in all the cells (for example, a macro cell, a pico cell, and a CSG cell) in which the "eICIC" is performed as illustrated in Fig. 6.

### Solution to Problem

In light of the foregoing, an objective of the present invention is to provide a mobile communication system and a MOBILE STATION that are capable of reducing the number of cells in which a "Measurement Subframe Pattern" is broadcasted.

The gist of a first feature of the present invention is a mobile communication system including: a first RADIO BASE STATION, and a second RADIO BASE STATION neighboring the first RADIO BASE STATION, in which the second RADIO BASE STATION is configured to broadcast setting broadcast information notifying, in a managed second cell, whether measurement subframe pattern information is broadcasted in a neighbor cell when the first RADIO BASE STATION broadcasts the measurement subframe pattern information indicating a measurement subframe from a MOBILE STATION in a standby mode in a managed first cell, and the MOBILE STATION in the standby mode is configured to receive the measurement subframe pattern information broadcasted in the first cell in order to perform a measurement process based on the measurement subframe pattern information when the MOBILE STATION detects that the measurement subframe pattern information is broadcasted in the neighbor cell based on the setting broadcast information broadcasted in the second cell.

The gist of a second feature of the present invention is a MOBILE STATION capable of communicating between a first RADIO BASE STATION and a second RADIO BASE STATION neighboring the first RADIO BASE STATION including: a receiving unit configured to receive measurement subframe pattern information broadcasted in a first cell managed by the first RADIO BASE STATION when the MOBILE STATION in a standby mode detects that measurement subframe pattern information is broadcasted in a neighbor cell based on setting broadcast information broadcasted in a second cell managed by the second RADIO BASE STATION, and a measuring unit configured to perform a measurement process based on the measurement subframe pattern information received with the receiving unit when the MOBILE STATION is in the standby mode, in which the setting notification information notifies whether the measurement subframe pattern information is broadcasted in a neighbor cell, and the measurement subframe pattern information indicates a measurement subframe pattern from a MOBILE STATION in the standby mode.

### Brief Description of Drawings

Fig. 1 is a view of the whole structure of a mobile communication system according to a first embodiment of the present invention.
Fig. 2 is a functional block diagram of a RADIO BASE STATION according to the first embodiment of the present invention.
Fig. 3 is a functional block diagram of a MOBILE STATION according to the first embodiment of the present invention.
Fig. 4 is a flowchart for describing the operation in the MOBILE STATION according to the first embodiment of the present invention.

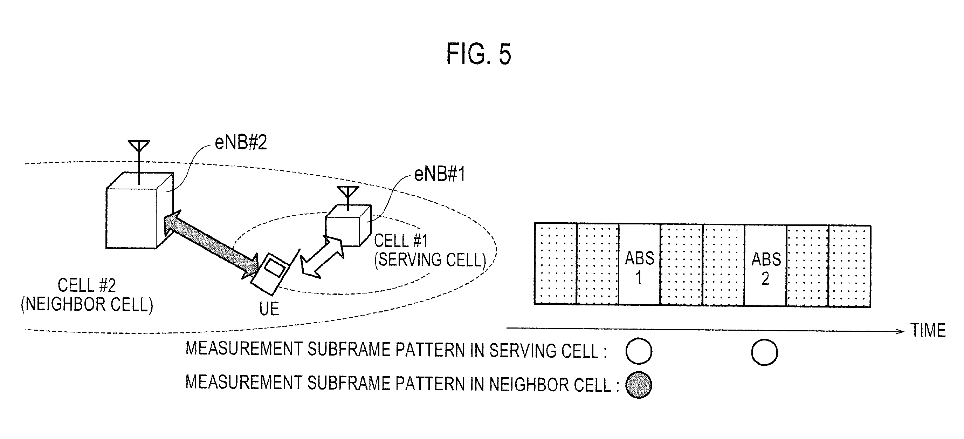

Fig. 5 is a view for a mobile communication system according to a prior art.
Fig. 6 is a view for a mobile communication system according to a prior art.

### Description of Embodiments

### (Mobile communication system according to the first embodiment of the present invention)

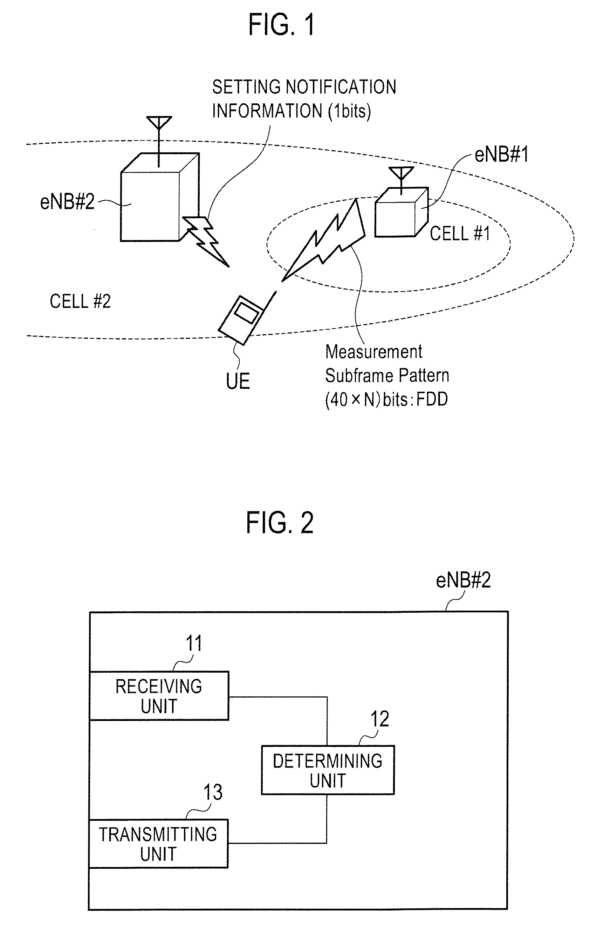

Next, a mobile communication system according to a first embodiment of the present invention will be described with reference to Figs. 1 to 4. Although an LTE mobile communication system is cited and described as an example of the mobile communication system according to the present embodiment, the present invention is applicable to another mobile communication system other than an LTE mobile communication system.

The mobile communication system according to the present embodiment is configured to perform an "eICIC" therein.

As illustrated in Fig. 1, the mobile communication system according to the present embodiment includes a RADIO BASE STATION eNB#1 that manages a cell #1 and a RADIO BASE STATION eNB#2 that manages a cell #2.

Here, the cells #1 and #2 can be any of a macro cell, a pico cell, and a CSG cell. Note that the pico cell can also be referred to as a femto (Femto) cell, a micro (Micro) cell, or the like.

It is assumed that the cell #1 is a pico cell and the cell #2 is a macro cell in the mobile communication system according to the present embodiment. The serving cell (Serving cell) for a MOBILE STATION UE in Idle mode is the cell #2. The neighbor cell (Neighbor cell) for MOBILE STATION UE in Idle mode is the cell #1.

As illustrated in Fig. 2, the RADIO BASE STATION eNB#2 includes a receiving unit 11, a determining unit 12, and a transmitting unit 13.

The receiving unit 11 is configured to receive various signals from a peripheral RADIO BASE STATION eNB (for example, the RADIO BASE STATION eNB#1) and a MOBILE STATION UE.

For example, the receiving unit 11 can be configured to receive the information indicating whether a peripheral RADIO BASE STATION eNB (for example, the RADIO BASE STATION eNB#1) broadcasts a "Measurement Subframe Pattern" through an X2 interface in a cell that is managed by the RADIO BASE STATION eNB (for example, the cell #1).

Alternatively, the receiving unit 11 is configured to receive the broadcast information in a cell that is managed by a peripheral RADIO BASE STATION eNB (for example, the RADIO BASE STATION eNB#1) (for example, the cell #1).

The determining unit 12 is configured to determine whether a "Measurement Subframe Pattern" is broadcasted in a neighbor cell.

For example, the determining unit 12 can be configured to determine based on the information from the peripheral RADIO BASE STATION eNB that has been received with the receiving unit 11 whether a "Measurement Subframe Pattern" is broadcasted in the neighbor cell.

Alternatively, the determining unit 12 can be configured to determine based on the broadcast information received with the receiving unit 11 whether a "Measurement Subframe Pattern" is broadcasted in the neighbor cell.

The transmitting unit 13 is configured to transmit various signals to a peripheral RADIO BASE STATION eNB and a MOBILE STATION UE.

For example, the transmitting unit 13 is configured to transmit the broadcast information to a managed the cell #2.

Herein, the transmitting unit 13 is configured to transmit, to the managed cell #2, the broadcast information including the setting notification information indicating whether a "Measurement Subframe Pattern" is broadcasted in a neighbor cell.

Specifically, the transmitting unit 13 is configured to set "1" on the setting notification information when the determining unit 12 has determined that a "Measurement Subframe Pattern" is broadcasted in a neighbor cell. The transmitting unit 13 is configured to set "0" on the setting notification information when the determining unit 12 has determined that a "Measurement Subframe Pattern" is not broadcasted in a neighbor cell.

Note that the transmitting unit 13 can be configured to set "1" on the setting notification information when it has been determined that a "Measurement Subframe Pattern" is broadcasted in every neighbor cell and to set "0" on the setting notification information when it has been determined that "Measurement Subframe Patterns" are not broadcasted in some of the neighbor cells.

Alternatively, that the transmitting unit 13 can be configured to set "1" on the setting notification information when it has been determined that "Measurement Subframe Patterns" are broadcasted in some of neighbor cells and to set "0" on the setting notification information when it has been determined that a "Measurement Subframe Pattern" is not broadcasted in all of the neighbor cells.

Further, that the transmitting unit 13 can be configured to set "1" on the setting notification information when it has been determined that "Measurement Subframe Patterns" are broadcasted in a predetermined number of neighbor cells and to set "0" on the setting notification information when it has been determined that "Measurement Subframe Patterns" are not broadcasted in the predetermined number of neighbor cells.

The transmitting unit 12 can be configured to transmit, to the peripheral RADIO BASE STATION eNB through the X2 interface, the information indicating whether the "Measurement Subframe Pattern" is broadcasted in the managed the cell #2.

Note that the "Measurement Subframe Pattern" is the measurement subframe pattern information indicating one or a plurality of subframes from among the subframes set as almost blank subframes (ABS) in the neighbor cell #1.

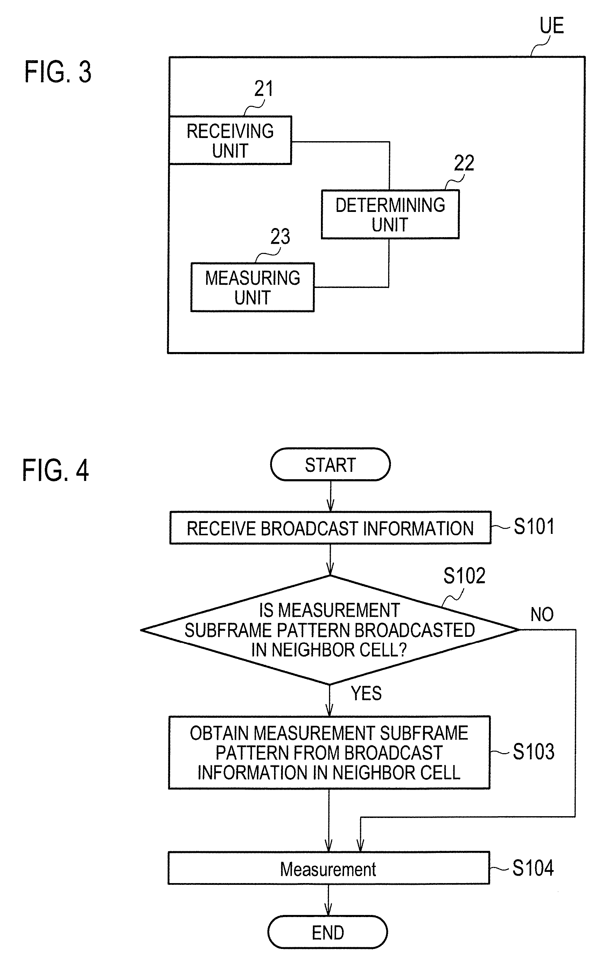

As illustrated in Fig. 3, the MOBILE STATION UE includes a receiving unit 21, a determining unit 22, and a measuring unit 23. In that case, the MOBILE STATION UE is in Idle mode.

The receiving unit 21 is configured to receive the broadcast information transmitted by a RADIO BASE STATION eNB.

For example, the receiving unit 21 is configured to receive the broadcast information in the cell #2 that is the serving cell and the broadcast information in the cell #1 that is a neighbor cell.

The determining unit 22 is configured to determine based on the setting broadcast information broadcasted in the cell #2 whether a "Measurement Subframe Pattern" is broadcasted in a neighbor cell (for example, the cell #1).

The receiving unit 21 is configured to receive a "Measurement Subframe Pattern" broadcasted in the neighbor cell (for example, the cell #1), for example, when the determining unit 22 detects, based on the setting broadcast information broadcasted in the cell #2, that the "Measurement Subframe Pattern" is broadcasted in the cell #1.

Note that the receiving unit 21 can be configured to obtain the "Measurement Subframe Pattern" included in the broadcast information (SI) in a neighbor cell (for example, the cell #1) when the receiving unit 21 obtains the setting broadcast information included in the broadcast information (System Information (SI)) in a serving cell (for example, the cell #2) and then the determining unit 22 detects, based on the setting broadcast information, that a "Measurement Subframe Pattern" is broadcasted in the neighbor cell.

Alternatively, the receiving unit 21 can be configured to obtain the "Measurement Subframe Pattern" included in broadcast information (SI) in a pico cell or a CSG cell when the receiving unit 21 obtains the setting broadcast information included in the broadcast information (SI) in a macro cell (for example, the cell #2) and then the determining unit 22 detects, based on the setting broadcast information, that the "Measurement Subframe Pattern" is broadcasted in a neighbor cell (for example, the cell #1).

The measuring unit 23 is configured to perform a "Measurement process" in the serving cell or a neighbor cell based on the "Measurement Subframe Pattern" received with the receiving unit 21.

Hereinafter, the operation of the MOBILE STATION according to the present embodiment will be described with reference to Fig. 4.

As illustrated in Fig. 4, in step S101, the MOBILE STATION UE receives the broadcast information (SI) in the serving cell (or the macro cell) in order to obtain the setting notification information included in the broadcast information.

In step S102, the MOBILE STATION UE determines based on the setting notification information whether a "Measurement Subframe Pattern" is broadcasted in a neighbor cell.

When the determination is "YES", the operation goes to step S103. When the determination is "NO", the operation goes to step S104.

In step S103, the MOBILE STATION UE receives the broadcast information (SI) in a neighbor cell (or a pico cell or a CSG) in order to obtain the "Measurement Subframe Pattern" included in the broadcast information.

When obtaining the "Measurement Subframe Pattern", the MOBILE STATION UE performs the "Measurement process" in the subframe (ABS) indicated by the "Measurement Subframe Pattern" in step S104.

For example, the MOBILE STATION UE having access to the CSG cell performs the "Measurement process" in a subframe other than the subframe (ABS) indicated by the "Measurement Subframe Pattern" obtained from the CSG cell. The MOBILE STATION UE having no access performs the "Measurement process" in the subframe (ABS) indicated by the "Measurement Subframe Pattern" obtained from the CSG cell.

On the other hand, when not obtaining the "Measurement Subframe Pattern", the MOBILE STATION UE performs the "Measurement process" in an arbitrary subframe in step S104".

The mobile communication system according to the present embodiment is configured to broadcast the above-mentioned setting notification information in a macro cell or the serving cell (for example, the cell #2) instead of broadcasting the "Measurement Subframe Pattern". This can reduce the number of cells in which the "Measurement Subframe Pattern" is transmitted.

The above-described aspects in the present embodiment can also be expressed as the following.

The gist of a first aspect according to the present embodiment is a mobile communication system including a RADIO BASE STATION eNB#1 (first RADIO BASE STATION) and a RADIO BASE STATION eNB#2 (second RADIO BASE STATION) neighboring the RADIO BASE STATION eNB#1. The RADIO BASE STATION eNB#2 is configured to broadcast the setting broadcast information notifying, in the managed cell #2 (second cell), whether a "Measurement Subframe Pattern (measurement subframe pattern information)" is broadcasted in a neighbor cell when the RADIO BASE STATION eNB#1 broadcasts the "Measurement Subframe Pattern" indicating a measurement subframe from a MOBILE STATION UE in Idle mode in the managed cell#1 (first cell) and, the MOBILE STATION UE in Idle mode is configured to receive the "Measurement Subframe Pattern" broadcasted in the cell #1 in order to perform a " Measurement process (measurement process)" based on the "Measurement Subframe Pattern" when the MOBILE STATION in Idle mode detects that the "Measurement Subframe Pattern" is broadcasted in the neighbor cell based on the setting broadcast information broadcasted in the cell #2.

The gist of a second aspect according to the present embodiment is a MOBILE STATION UE capable of communicating between a radio base station eNB#1 and a radio base station eNB#2. the MOBILE STATION UR includes a receiving unit 21 configured to receive "Measurement Subframe Pattern" broadcasted in a cell #1 when the MOBILE STATION UE in Idle mode detects that the "Measurement Subframe Pattern" is broadcasted in a neighbor cell based on setting broadcast information broadcasted in a cell #2; and a measuring unit 23 configured to perform a "Measurement process" based on the "Measurement Subframe Pattern" received with the receiving unit 21.

In the first and second aspects of the present embodiment, the "Measurement Subframe Pattern" can indicate one or a plurality of subframes from among the subframes set as ABSs in the cell #1.

The above-mentioned operations of the RADIO BASE STATIONs eNB#1/eNB#2 and the MOBILE STATION UE can be implemented with hardware, can be implemented with a software module executed with the processor, or can be implemented with the combination thereof.

The software module can be provided in an arbitrary format storage medium such as a random access memory (RAM), a flash memory, a read only memory (ROM), an erasable programmable ROM (EPROM), an electrically erasable and programmable ROM (EEPROM), a register, a hard disk, a removal disk, and a CD-ROM.

The storage medium is connected to a processor such that the processor can read and write information from/to the storage medium. The storage medium can be integrated in a processor. The storage medium and the processor can be provided in an ASIC. The ASIC can be provided in the RADIO BASE STATIONs eNB#1/eNB#2 and the MOBILE STATION UE. Each of the storage medium and the processor can be provided in the RADIO BASE STATIONs eNB#1/eNB#2 and the MOBILE STATION UE as a discrete component.

The present invention has been described in detail above with the embodiment. However, it is obvious for a person with an ordinary skill in the art that the present invention is not limited to the embodiment described herein. The present invention can be modified or altered without departing from the gist and scope of the invention defined by the description of the claims. Thus, the description herein is aimed at describing examples and does not mean any limitations on the present invention.

Note that Japanese Patent Application No. 2011-102513 (filed April 28, 2011) is incorporated herein by reference in its entirety.

### Industrial Applicability

As described above, the present invention can provide a mobile communication system and a MOBILE STATION that are capable of reducing the number of cells in which a "Measurement Subframe Pattern" is broadcasted.

### Reference Signs List

- eNB#1, eNB#2: RADIO BASE STATION
- UE: MOBILE STATION
- 11, 21: receiving unit
- 12, 22: determining unit
- 13: transmitting unit
- 23: measuring unit

## Claims

1. A mobile communication system comprising:
a first RADIO BASE STATION; and
a second RADIO BASE STATION neighboring the first RADIO BASE STATION, wherein
the second RADIO BASE STATION is configured to broadcast setting broadcast information notifying, in a managed second cell, whether measurement subframe pattern information is broadcasted in a neighbor cell when the first RADIO BASE STATION broadcasts the measurement subframe pattern information indicating a measurement subframe from a MOBILE STATION in a standby mode in a managed first cell, and
the MOBILE STATION in the standby mode is configured to receive the measurement subframe pattern information broadcasted in the first cell in order to perform a measurement process based on the measurement subframe pattern information when the MOBILE STATION detects that the measurement subframe pattern information is broadcasted in the neighbor cell based on the setting broadcast information broadcasted in the second cell.

2. The mobile communication system according to claim 1, wherein the measurement subframe pattern information indicates one or a plurality of subframes from among subframes set as Almost Blank Subframes (ABS) in the first cell.

3. A MOBILE STATION capable of communicating between a first RADIO BASE STATION and a second RADIO BASE STATION neighboring the first RADIO BASE STATION comprising:
a receiving unit configured to receive measurement subframe pattern information broadcasted in a first cell managed by the first RADIO BASE STATION when the MOBILE STATION in a standby mode detects that measurement subframe pattern information is broadcasted in a neighbor cell based on setting broadcast information broadcasted in a second cell managed by the second RADIO BASE STATION; and
a measuring unit configured to perform a measurement process based on the measurement subframe pattern information received with the receiving unit when the MOBILE STATION is in the standby mode, wherein
the setting notification information notifies whether the measurement subframe pattern information is broadcasted in a neighbor cell, and
the measurement subframe pattern information indicates a measurement subframe pattern from a MOBILE STATION in the standby mode.

4. The MOBILE STATION according claim 3, wherein the measurement subframe pattern information indicates one or a plurality of subframes from among subframes set as Almost Blank Subframes (ABS) in the first cell.
